# EUROPEAN PATENT SPECIFICATION

(11) **EP 4 454 239 B1**
(45) Date of publication and mention of the grant of the patent: **22.10.2025**
(21) Application number: 22830880.5
(22) Date of filing: 20.12.2022
(51) Int. Cl.: H04L 45/302, H04L 45/121

(54) **APPLICATION BASED ROUTING**
ANWENDUNGSBASIERTES ROUTING
ROUTAGE BASÉ SUR UNE APPLICATION

(30) Priority: 22.12.2021 FI 20216330
(43) Date of publication of application: 30.10.2024
(73) Proprietor: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy
(86) International application number: PCT/EP2022/086954
(87) International publication number: WO 2023/118117

(56) References cited:
- US-A1- 2011 286 384
- US-A1- 2014 169 286

## Description

### TECHNICAL FIELD

The invention concerns in general the technical field of telecommunications. More particularly, the invention concerns management of communications in mobile communication networks.

### BACKGROUND

The concept of roaming is very well known from mobile communication networks, and it refers to a situation in which a mobile communication network outside of the home mobile communication network serves a subscriber of the home mobile communication network. In this kind of approach telecom operators of the different mobile communication networks have agreed on terms of using the services of a visited mobile communication network.

Traditionally, when the subscriber is roaming and wants e.g. to access to a data network, such as to Internet, any traffic from the subscriber is routed from the visited mobile communication network to the home mobile communication network through which the data network is accessed to. The same communication path is applied to when data is routed from the data network back to the subscriber. This kind of home routing approach works well as such but requires a lot of effort in making roaming agreements between the telecom operators. Additionally, due to a long communication path the subscriber may experience remarkable latency which causes dissatisfaction.

In order to solve at least some of the above-described issues there is introduced so called local breakout (LBO) approach. In the local breakout approach data traffic is routed directly from the visited mobile communication network to the data network while authentication related tasks and management of the subscription data is handled in the home mobile communication network. This approach is e.g. available e.g. in the 5G communication technology, for example, but also in other network technologies.

In a document US 2014/0169286 A1 it is described an example of the breakout approach according to the prior art.

However, there is a need to establish more sophisticated solutions for routing data traffic.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a control system, a computer program, and a communication system for controlling a routing of data traffic.

The objects of the invention are reached by a method, a control system, a computer program, and a communication system for controlling a routing of data traffic as defined by the respective independent claims.

According to a first aspect, a method for controlling a routing of data traffic of a roaming terminal device with data network is provided, the method, performed by a control system, comprises:
receiving, from an application executed in the roaming terminal device, a request for establishing a connection over an application specific packet data unit, PDU, session,
determining, based on the PDU session, at least one policy for routing the data traffic between the roaming terminal device and the data network, and selecting, based on the at least one policy, a communication network for managing the routing of the data traffic of the roaming terminal device.

The method may further comprise:
generating a first control signal to a network node of a selected communication network for assigning a responsibility for managing the routing of the data traffic of the roaming terminal device.

Moreover, the method may further comprise:
generating a second control signal to a network node of a communication network serving the roaming terminal device.

The first control signal and the second control signal may e.g. cause the communication network serving the roaming terminal device and the selected communication network to arrange the data traffic between the roaming terminal device and the data network through the selected communication network.

For example, the at least one policy may be determined based on at least parameter descriptive of a type of data traffic caused due to the activation of the application wherein the at least one parameter is based on the PDU session.

According to a second aspect, a control system for controlling a routing of data traffic of a roaming terminal device with data network is provided, the control system is configured to:
receive, from an application executed in the roaming terminal device, a request for establishing a connection over an application specific packet data unit, PDU, session,
determine, based on the PDU session, at least one policy for routing the data traffic between the roaming terminal device and the data network, and
select, based on the at least one policy, a communication network for managing the routing of the data traffic of the roaming terminal device.

The control system may further be configured to:
generate a first control signal to a network node of a selected communication network for assigning a responsibility for managing the routing of the data traffic of the roaming terminal device.

Moreover, the control system may further be configured to:
generate a second control signal to a network node of a communication network serving the roaming terminal device.

The control system may be configured to generate the first control signal and the second control signal so that they cause the communication network serving the roaming terminal device and the selected communication network to arrange the data traffic between the roaming terminal device and the data network through the selected communication network.

The control system may also be configured to determine the at least one policy based on at least parameter descriptive of a type of data traffic caused due to the activation of the application wherein the at least one parameter is based on the PDU session.

According to a third aspect, a computer program comprising computer readable program code configured to cause performing of the method according to the first aspect as defined above when the computer readable program code is run on one or more computing apparatuses.

According to a fourth aspect, a communication system is provided, the communication system comprising:
a plurality of communication networks,
a data network,
a terminal device served by one of the plurality of communication networks, and
a control system according to the second aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figure 2 illustrates schematically a method according to an example.
Figure 3 illustrates schematically an apparatus according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

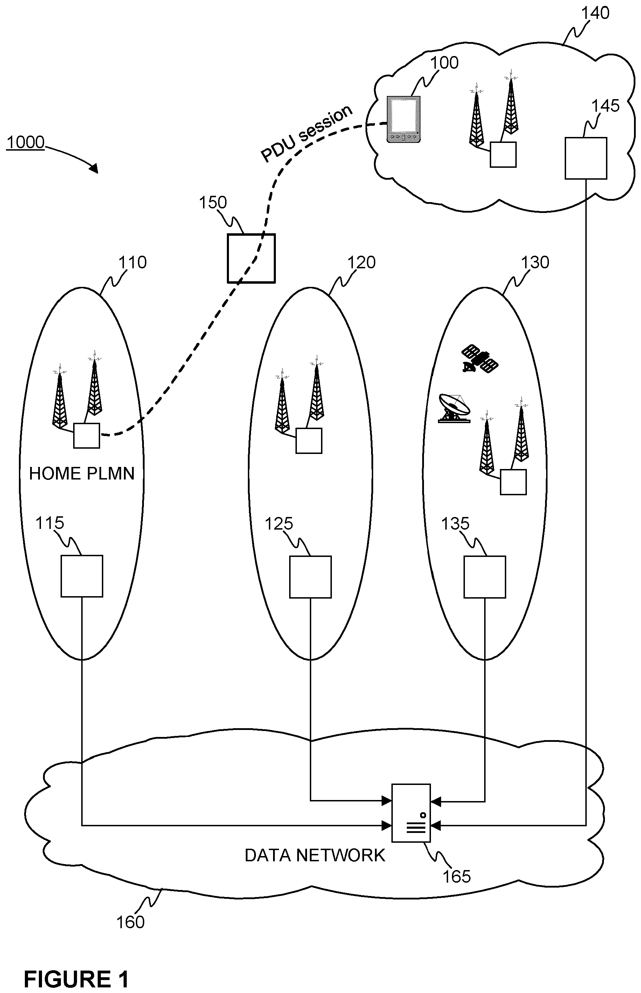

Figure 1 illustrates schematically an example of a communication system 1000 into which the present invention may be implemented to. The communication system comprises a plurality of networks 110, 120, 130, 140 suitable for providing service to terminal devices 100 residing in a service area of the respective network in a situation that the terminal device 100, or the subscription, is allowed to access the respective network 110, 120, 130, 140. At least some of the networks 110, 120, 130, 140 are mobile communication networks wherein some of the networks may be wireless local area networks or even satellite based communication networks. According to the present invention at least some of the mobile communication networks 110, 120, 130, 140 are configured to implement a communication technology having a capability to implement a local breakout (LBO) operation. A local breakout point shall be understood as an access point to a data network 160 and, hence, the local breakout operation refers to such methods and functions which enable accessing to the data network 160, such as to Internet, over the respective network 110, 120, 130, 140. For describing at least some aspects of the invention it is assumed that the communication to and from the data network 160 is implemented with a server device 165 configured to implement a service requested by a terminal device 100. For example, the local breakout functionality is available in mobile communication networks implementing a 5G technology. As shown in Figure 1 the communication networks 110, 120, 140 and 130 comprise network nodes referred with 115, 125, 135, 145 which are entities, or functions, in the respective mobile communication networks 110, 120, 130, 140 which may be configured to implement a function to route data traffic to and from the data network 160. The routing of the data traffic through the network node 115 residing in the home communication network 110 may be called as home routing for the terminal device 100 whereas if the routing is performed by another communication network 120, 130, 140 for the terminal device 100, so-called local breakout operation may be performed with the respective network node 125, 135, 145 in the respective communication networks. The network nodes 115, 125, 135, 145 may be entities configured to implement a functionality of the local breakout at least in part, such as under control of another entity, and in some example embodiments the network nodes 115, 125, 135, 145 may also comprise applicable interfaces to communicate with the data network 100, and the respective entities therein. For example, the network node 115, 125, 135, 145 may be a gateway device comprising an interface towards the data network 100, such as PGN in mobile communication networks configured to implement 3G technology or MME and SGW in mobile communication networks configured to implement 4G technology. Correspondingly, in a 5G network architecture the network node 115, 125, 135, 145 may be so-called Access and Mobility Management Function (AMF) with so-called User Plane Function (UPF) comprising an interface NG6 towards the data network 100. As mentioned, the operation of the network nodes 115, 125, 135, 145 may be implemented with a cooperation of a plurality of network nodes, or functions therein, in order to control a local breakout operation in accordance with the present invention as described herein.

At least some aspects of the present invention relate to controlling a routing of data traffic of a terminal device 100 that is roaming in a mobile communication network and requests a service from a server device 165 residing in the data network 160. The network in which the terminal device 100 is roaming and, thus, served as visiting terminal device 100 is referred with 140 in Figure 1 and it is hereby assumed that the mobile communication network 140 implements 5G technology. In other words, the roaming refers to a situation that the terminal device 100 is served by another communication network than the home mobile communication network which is referred with 110 in Figure 1. This means that the home communication network 110 corresponds to the network in which the subscription related data is managed which subscription is included in the terminal device 100 in question. Thus, for sake of clarity, the term terminal device 100 shall be understood in the context of the present invention, unless otherwise mentioned, to include the subscription for the home communication network 110 wherein the subscription, or subscriber identity module, may be implemented with a hardware, such as an integrated circuit card, with a software, or with a combination of these two. The other networks 120, 130, 140 may be operated by the same telecom operator as the home mobile communication network 110 or by other telecom operator(s). As already mentioned, the applied communication technologies in the other networks 120, 130, 140 may be 5G, 4G, Wi-Fi, satellite based, or any similar as non-limiting examples. Some of these networks may be configured to operate as private networks into which the access may be restricted with any known manner. The private network may also refer to a sub-network of another network, such as a mobile communication network. As said, at least some of them are configured to provide the local breakout function to the data network 160 as described in the foregoing description.

In accordance with the present invention a control system 150 is provided for controlling at least in part a delivery of data packet-based communication between the terminal device 100 and the data network 100. The control system 150 may refer to a standalone device or a plurality of devices, or a functionality implemented by one or more network devices, to perform a control function as described. The control system 150 may be configured to receive information regarding the communication of the terminal device 100 with one or more entities in the data network 160. Moreover, the control system 150 may store, or at least have access to, data defining service parameters with respect to a number of communication networks 110, 120, 130, 140, which may e.g. refer to policies for implementing the communication. In addition, the control system may store, or at least have access to, subscriber related data, such as their identifiers as well as assigned IP addresses for data traffic, e.g. to derive the service parameters if set user specifically.

In general, the control system 150 may reside in one of the communication networks the communication of the terminal device 100 travels through. An example of an applicable communication network may be the home communication network 110. In some other example embodiments the control system 150 may reside in a specific network, such as in a so-called IP exchange (IPX) network model which may be established for exchanging IP based data traffic between communication networks of different operators, or even the same operator. The IPX model is arranged to operate via IP based Network-to-Network Interface. The IPX model may be applied in the context of the present invention in a manner that the IPX network operator makes the agreements with the other operators, and, thus, receives a variety of details of the respective networks and other entities, which allows the control system 150 to perform operations for managing a routing of the data traffic, such as selecting an optimal local breakout point, as is described in the forthcoming description. For sake of clarity, it is hereby mentioned that the operation of the control system 150 in the manner as described in the forthcoming description does not require that it resides in the IPX network.

In accordance with an embodiment the information may be received by arranging at least a part of the data traffic between the terminal device 100 and the data network 100 to occur through the control system 150, or at least so that the control system 150 may monitor the data traffic e.g. through an applicable interface, such as through a mirror port. For example, an example of a data path from the terminal device 100 is illustrated with a dashed line in Figure 1. Naturally the data path is established over communication networks, but a main idea is to disclose that the control system 150 resides in the data path between the terminal device 100 and the home communication network 110. Alternatively or in addition to the data traffic the information regarding the communication may be delivered on a control plane using the signaling between the respective entities through the control system 150.

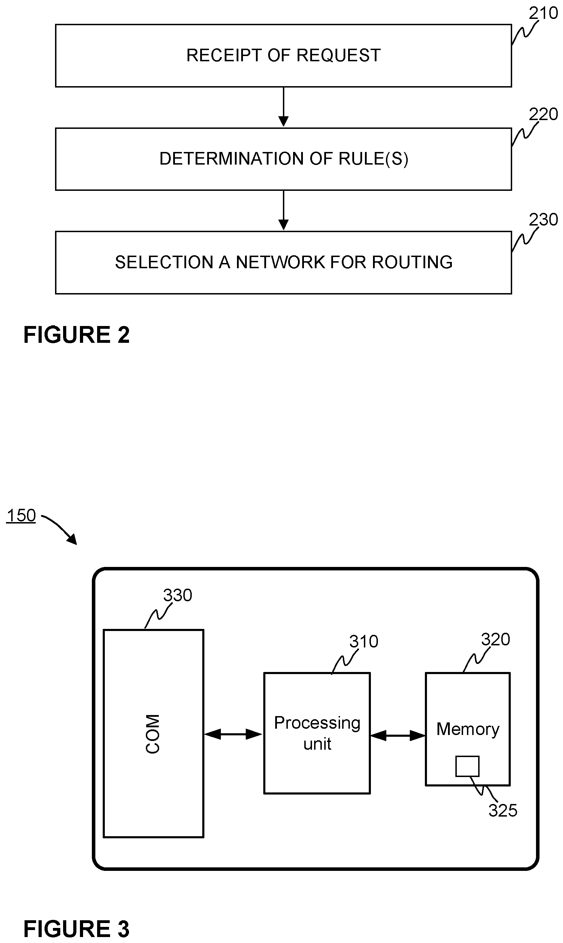

Next, at least some aspects of the present invention are described by referring to Figure 2 in which a method according to an exemplary embodiment is illustrated which method may be implemented by a control system 150 e.g. in a communication system as schematically illustrated in Figure 1. The method is for controlling a routing of data traffic of a roaming terminal device 100 with data network. In other words, the controlling of the routing refers to that the data traffic between the roaming terminal device 100 and a network node in the data network 160, such as the server device 165, in arranged in an optimal manner. The method is initiated in response to an operation performed by the terminal device 100 residing as a roaming subscriber in a visited communication network 140. Such an operation is performed by an application executed by the terminal device 100 and the operation may e.g. refer to that the application requires interaction with the server device 165 residing in the data network 160. For example, the requirement of the interaction may be a result of a user interaction with the application, or it may originate from an automatic operation set for the application. Since the communication is arranged so that a connection request, or any similar signaling, is arranged to occur through the control system 150, the control system 150 is configured to receive 210, in response to an execution of the application in the roaming terminal device 100, a request for establishing a connection to the server device 165 from an application executed in the terminal device 100. Naturally, the application uses the communication resources, implemented with a hardware and software, in the terminal as well the communication resources of one or more communication networks when the request is delivered to the control system 150. The receipt of the request refers to that the control system 150 is arranged to access the connection request at least in an extent as described herein. Since the terminal device 100 is roaming in the visited communication network 140, the request for establishing the connection is typically defined so that a final recipient of the request is a network node in the home communication network 110, but the signal path may be arranged through the control system 150 e.g. by defining the connection to the home communication network 110 accordingly. Further, in accordance with an example embodiment, the terminal device 100 may be served by a mobile communication network implementing 5G communication technology for the terminal device 100 and due to this such connections are established over an application specific packet data unit, PDU, session. The establishment of the PDU session is performed by the terminal device 100 so that it uses an allowed NSSAI (Network Slice Selection Assistance Information) determined upon a registration to the network so as to find out the S-NSSAI (Single Network Slice Selection Assistance Information) for the PDU session. If no S-NSSAI is available, the network, and the AMF (Access and Mobility Management Function) therein, may select the network nodes, such as V-SMF (visited Session Management Function) and H-SMF (home Session Management Function), for the PDU session. As a result a slice for the PDU session may be determined with the manner as described above with a necessary accuracy to understand the present invention. The PDU session itself may be determined in accordance with predefined rules, or policies such as URSP UE Route Selection Policy) stored in a memory of the terminal device 100 which PDU session may be defined in an application basis. Hence, the terminal device 100 may determine the PDU session based on the application, or a service, and start establishing the PDU session from the visited network 140 through the control system 150.

In response to that the control system 150 receives the connection request over the PDU session established based on the activated application the control system 150 is configured to determine 220, based on the PDU session, at least one policy for routing the data traffic between the roaming terminal device 100 and the data network 160. The one or more policies define at least a number of parameters with respect to a number of communication networks. In other words, the policies define for the communication networks at least some parameters available if a respective communication network is selected to serve the communication at least in part. The parameters may be technical or any other, such as commercial, such as pricing of the communication. In view of the above the determination of the at least one policy may be performed so that the control system 150 detects the connection request over the PDU session and identifies the PDU session applied therein. Further, the control system 150 may be configured to determine 220 the at least one policy e.g. by inquiring the at least one policy for the routing from data storage configured to store such data. The data storage may e.g. be an internal or an external memory unit to the control system 150 implemented in a form of a database, as a non-limiting example. Depending on an implementation the inquiry to the data storage may also comprise data identifying the subscriber, or the subscription, in case the ruling is also made dependent on the subscriber. In response to the inquiry the control system 150 may receive one or more policies descriptive on characteristics of the respective communication networks. The control system 150 may evaluate, based on the data in the policies and the type of the PDU session, a communication network suitable to serve the communication of the terminal device 100 to and from the data network 160. The control system 150 detects at least one parameter descriptive of a type of data traffic caused due to the activation of the application wherein the at least one parameter may be based on the established PDU session, i.e. the type of it, and use that in the evaluation for finding a policy, and, thus, a communication network for serving the terminal device 100. Applied parameter may e.g. be bandwidth or latency or any similar or a plurality of them, or any combination of them. The policy returned in response to the inquiry indicates the communication network 110, 120, 130, 140 to be used for the data traffic.

In response to the determination 220 of the policy the control system 150 is configured to select, based on the at least one policy, a communication network 110, 120, 130, 140 for managing the routing of the data traffic of the roaming terminal device 100. Alternatively or in addition, the selection may comprise that the control system 150 is configured to select a number of network entities, and especially a network node 115, 125, 135, 145 of the selected communication network 110, 120, 130, 140, to assign a responsibility, at least in part, to manage the routing of the data traffic between the roaming terminal device 100 and the network entity 165 residing in the data network 160 to the selected network node. In case the selection is performed only at the communication network 110, 120, 130, 140 level the selected communication network 110, 120, 130, 140 may be configured to arrange the management of the routing as an internal operation by applying internal rules defined e.g. for a connection management. On the other hand, if the control system 150 is configured to select the required network entities for managing the routing, the control system 150 shall be provided access to such data and it may e.g. be included in the policy relating to the selected communication network 110, 120, 130, 140 in question.

Furthermore, the control system 150 may be configured to, in response to the selection of the communication network 110, 120, 130, 140 in e.g. one of the manners as described, generate a control signal, called also a first control signal herein, to the selected communication network 110, 120, 130, 140 and possibly to a selected network node 115; 125; 135, 145 therein, for assigning a responsibility for managing the routing of the data traffic of the roaming terminal device 100. If the control system 150 selects only the communication network 110, 120, 130, 140 the control signal may be delivered to a control node of the respective network, such as a MME, by applying established signaling mechanisms of the communication networks 110, 120, 130, 140. In any case, eventually a network node 115, 125, 135, 145 of the selected communication network 110, 120, 130, 140 may initiate necessary processes for managing the routing of the data with the data network 160.

The method in accordance with the present invention allows the control system 150 to arrange a local breakout in a location in which matches with the executed application in an optimal manner in accordance with the definitions set in the policies accessible by the control system 150. The applied policy may be selected based on an PDU session by means of which the communication connection is requested to.

In accordance with an example embodiment in response to the selection of the communication network 110, 120, 130, 140 for performing the local breakout the control system 150 is configured to perform necessary operations to achieve, from its perspective, the terminal device 100 to communicate through the selected communication network 110, 120, 130, 140 to and from the data network 160. Such operations may e.g. comprise a generation of another control signal to the communication network 140 serving the terminal device 100 so as to inform the respective serving communication network 140 on the routing. The destination of the control signal may e.g. a network node 145 of the serving communication network 140 which network node is assigned to a task of managing, at least in part, a routing of data traffic of the terminal devices 100 the communication network 140 serves. The generation of the other control signal, e.g. called as a second control signal, may cause the serving communication network 140, and the respective network node 145, to agree with applicable signaling with the selected communication network 110, 120, 130, 140 that the data traffic is to be arranged between the mentioned communication networks 110, 120, 130, 140. In other words, the control system 150 may be configured to perform a procedure with the communication network 140 serving the terminal device 100 and with the selected communication network 110, 120, 130, 140 to cause routing between the network wherein the local breakout occurs to the data network 160 from the selected communication network 110, 120, 130, 140. Naturally, the serving communication network 140 may inform the terminal device 100 accordingly. In case the selected network is the same as the communication network 140 currently serving the terminal device 140 the control system 150 may generate a control signal to inform the serving communication network on that it is allowed to perform the local breakout directly to the data network 160 so as to establish a data path for the data traffic.

In some example embodiments the control system 150 may reside in a network also suitable for applying the local breakout. Such a network may e.g. be so-called IP exchange (IPX) network model for exchanging IP based data traffic between communication networks of different operators. The IPX model is arranged to operate via IP based Network-to-Network Interface. For example, in accordance with the present invention the control system 150 residing in the IPX network may be configured to performed so-called regional breakout operation by means of which latency may be reduced in the communication. Additionally, the IPX model may be applied in the context of the present invention in a manner that the IPX network operator makes the agreements with the other operators, and, thus, receives a variety of technical details of the respective networks in the form of policies, which allows the control system 150 having access to such data select an optimal network, and a network node, for managing the routing of the data traffic i.e. selecting an optimal local breakout point so as to avoid the routing through the home network.

Generally speaking, the present invention may utilize any type of breakout operation. In other words, as a consequence of the selection 230 of the network and the generation of the control signal a local breakout operation, a regional breakout, an edge breakout, or a private breakout may be called to, for example. The edge breakout may refer to an implementation in which user plane traffic is routed close to the terminal device 100 to the data network 160 i.e. close to the edge of the serving communication network. The private breakout may refer, as already discussed, to an implementation in which the control system 150 causes a breakout operation to occur in the private network serving the terminal device 100 as a roaming subscriber.

An example of an apparatus suitable for performing a task of the control system 150 according to an example embodiment the invention is schematically illustrated in Figure 3. The apparatus may be configured to implement at least part of the method for routing of data traffic of a roaming terminal device 100 with data network 160 as described. The execution of the method, or at least some portions of it, may be achieved by arranging at least one processor 310 to execute at least some portion of computer program code 325 stored in at least one memory 320 causing the processor 310, and, thus, the apparatus as the control system 150 to implement one or more method steps as described. In other words, the processor 310 may be arranged to access the memory 320 and to retrieve and to store any information therefrom and thereto, such as to access the at least one policy for routing the data traffic. Moreover, the processor 310 may be configured to control a communication through one or more communication interfaces 330 for accessing the other entities being involved in the operation. Hence, the communication interface 330 may be arranged to implement, possibly under control of the processor 310, corresponding communication protocols, such as an IP, for communicating with one or more entities. The term communication interface 330 shall be understood in a broad manner comprising necessary hardware and software elements for implementing the communication techniques. Further, the apparatus in question may comprise one or more input/output devices for inputting and outputting information. Such input/output devices may e.g. be keyboard, buttons, touch screen, display, loudspeaker, microphone camera and so on. In some implementation of the apparatus at least some of the input/output devices may be external to the apparatus and coupled to it either wirelessly or in a wired manner. For sake of clarity, the processor 310 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 320, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

For sake of completeness, the operation of the control system 150 may be implemented with a plurality of apparatuses as e.g. illustrated in Figure 3 and arranged to cooperate in a distributed computing environment.

Moreover, some aspects of the present invention may relate to a computer program product which, when executed by at least one processor, cause an apparatus, such as the control system 150, to perform at least some portions of the method as described.

The specific examples provided in the description given above should not be construed as limiting the applicability and/or the interpretation of the appended claims. Lists and groups of examples provided in the description given above are not exhaustive unless otherwise explicitly stated.

## Claims

1. A method for controlling a routing of data traffic of a roaming terminal device (100) with data network (160), the roaming terminal device (100) is served by a visited communication network (140), the method, performed by a control system (150), comprises:
receiving (210), from an application executed in the roaming terminal device (100), a request for establishing a connection, the connection is to be established over an application specific packet data unit, PDU, session,
wherein the method further comprises:
determining (220), based on the PDU session, at least one policy for routing the data traffic between the roaming terminal device (100) and the data network (160), the determination (220) of the at least one policy based on the PDU session is performed based on a detection of at least one parameter descriptive of a type of data traffic caused due to an activation of the application executed in the roaming terminal device (100) wherein the at least one parameter is based on the PDU session, and
selecting (230), based on the at least one policy, a communication network (110; 120; 130; 140) for managing the routing of the data traffic of the roaming terminal device (100).

2. The method of claim 1, the method further comprises:
generating a first control signal to a network node (115; 125; 135; 145) of a selected communication network (110; 120; 130; 140) for assigning a responsibility for managing the routing of the data traffic of the roaming terminal device (140).

3. The method of any of the preceding claims, the method further comprises:
generating a second control signal to a network node (115; 125; 135; 145) of a communication network (110; 120; 130; 140) serving the roaming terminal device (100).

4. The method of claim 3, wherein the first control signal and the second control signal cause the communication network (110; 120; 130; 140) serving the roaming terminal device (100) and the selected communication network (110; 120; 130; 140) to arrange the data traffic between the roaming terminal device (100) and the data network (160) through the selected communication network (110; 120; 130; 140).

5. A control system (150) for controlling a routing of data traffic of a roaming terminal device (100) with data network (160), the roaming terminal device (100) is served by a visited communication network (140), the control system (150) is configured to:
receive (210), from an application executed in the roaming terminal device (100), a request for establishing a connection, the connection is to be established over an application specific packet data unit, PDU, session,
wherein the control system (150) is further configured to:
determine (220), based on the PDU session, at least one policy for routing the data traffic between the roaming terminal device (100) and the data network (160), the determination (220) of the at least one policy based on the PDU session is performed based on a detection of at least one parameter descriptive of a type of data traffic caused due to an activation of the application executed in the roaming terminal device (100), and
select (230), based on the at least one policy, a communication network (110; 120; 130; 140) for managing the routing of the data traffic of the roaming terminal device (100).

6. The control system (150) of claim 5, the control system (150) further configured to:
generate a first control signal to a network node (115; 125; 135; 145) of a selected communication network (110; 120; 130; 140) for assigning a responsibility for managing the routing of the data traffic of the roaming terminal device (140).

7. The control system (150) of claim 5 or claim 6, the control system (150) further configured to:
generate a second control signal to a network node (115; 125; 135; 145) of a communication network (110; 120; 130; 140) serving the roaming terminal device (100).

8. The control system of claim 7, wherein the control system (150) is configured to generate the first control signal and the second control signal so that they cause the communication network (110; 120; 130; 140) serving the roaming terminal device (100) and the selected communication network (110; 120; 130; 140) to arrange the data traffic between the roaming terminal device (100) and the data network (160) through the selected communication network (110; 120; 130; 140).

9. A computer program comprising computer readable program code configured to cause performing of the method according to any of claims 1 to 4 when the computer readable program code is run on one or more computing apparatuses.

10. A communication system comprising:
a plurality of communication networks (110; 120; 130; 140),
a data network (160),
a terminal device (100) served by one of the plurality of communication networks (110; 120; 130; 140), and
a control system (150) according to any of claims 5 to 8.

## Patentansprüche

1. Verfahren zum Steuern eines Umleitens von Datenverkehr eines Roaming-Endgeräts (100) mit einem Datennetzwerk (160), wobei das Roaming-Endgerät (100) von einem besuchten Kommunikationsnetzwerk (140) bedient wird, wobei das Verfahren, das von einem Steuerungssystem (150) durchgeführt wird, Folgendes umfasst:
Empfangen (210) einer Anfrage zum Herstellen einer Verbindung von einer in dem Roaming-Endgerät (100) ausgeführten Anwendung, wobei die Verbindung über eine anwendungsspezifische Paketdateneinheit-Sitzung, PDU-Sitzung (packet data unit), hergestellt werden soll,
wobei das Verfahren ferner Folgendes umfasst:
Bestimmen (220) auf der Grundlage der PDU-Sitzung mindestens einer Richtlinie für das Umleiten von Datenverkehr zwischen dem Roaming-Endgerät (100) und dem Datennetzwerk (160), wobei das Bestimmen (220) der mindestens einen Richtlinie auf der Grundlage der PDU-Sitzung auf der Grundlage einer Erkennung mindestens eines Parameters durchgeführt wird, der einen Typ von Datenverkehr beschreibt, der aufgrund einer Aktivierung der in dem Roaming-Endgerät (100) ausgeführten Anwendung veranlasst wird, wobei der mindestens eine Parameter auf der Grundlage der PDU-Sitzung basiert und
Auswählen (230) eines Kommunikationsnetzwerks (110; 120; 130; 140) auf der Grundlage der mindestens einen Richtlinie zum Verwalten des Umleitens von Datenverkehr des Roaming-Endgeräts (100).

2. Verfahren nach Anspruch 1, wobei das Verfahren ferner Folgendes umfasst:
Erzeugen eines ersten Steuerungssignals an einem Netzwerkknoten (115; 125; 135; 145) eines ausgewählten Kommunikationsnetzwerks (110; 120; 130; 140) zum Zuweisen einer Verantwortung für die Verwaltung des Umleitens von Datenverkehr des Roaming-Endgeräts (140).

3. Verfahren nach einem der vorstehenden Ansprüche, das Verfahren ferner umfassend:
Erzeugen eines zweiten Steuerungssignals an einem Netzwerkknoten (115; 125; 135; 145) eines Kommunikationsnetzwerks (110; 120; 130; 140), das das Roaming-Endgerät (100) bedient.

4. Verfahren nach Anspruch 3, wobei das erste Steuerungssignal und das zweite Steuerungssignal das Kommunikationsnetzwerk (110; 120; 130; 140), das das Roaming-Endgerät (100) bedient, und das ausgewählte Kommunikationsnetzwerk (110; 120; 130; 140) veranlassen, den Datenverkehr zwischen dem Roaming-Endgerät (100) und dem Datennetzwerk (160) über das ausgewählte Kommunikationsnetzwerk (110; 120; 130; 140) anzuordnen.

5. Steuerungssystem (150) zum Steuern eines Umleitens von Datenverkehr eines Roaming-Endgeräts (100) mit einem Datennetzwerk (160), wobei das Roaming-Endgerät (100) von einem besuchten Kommunikationsnetzwerk (140) bedient wird, wobei das Steuerungssystem (150) konfiguriert ist zum:
Empfangen (210) einer Anfrage zum Herstellen einer Verbindung von einer Anwendung, die auf dem Roaming-Endgerät (100) ausgeführt wird, wobei die Verbindung über eine anwendungsspezifische Paketdateneinheit-Sitzung, PDU, hergestellt werden soll,
wobei das Steuerungssystem (150) ferner konfiguriert ist zum:
Bestimmen (220) auf der Grundlage der PDU-Sitzung mindestens einer Richtlinie für das Umleiten von Datenverkehr zwischen dem Roaming-Endgerät (100) und dem Datennetzwerk (160), wobei das Bestimmen (220) der mindestens einen Richtlinie auf der Grundlage der PDU-Sitzung auf der Grundlage eines Erkennens mindestens eines Parameters durchgeführt wird, der einen Typ von Datenverkehr beschreibt, der aufgrund einer Aktivierung der in dem Roaming-Endgerät (100) ausgeführten Anwendung veranlasst wird, und
Auswählen (230) eines Kommunikationsnetzwerks (110; 120; 130; 140) zum Verwalten des Umleitens von Datenverkehr des Roaming-Endgeräts (100) auf der Grundlage der mindestens einen Richtlinie.

6. Steuerungssystem (150) nach Anspruch 5, wobei das Steuerungssystem (150) ferner konfiguriert ist zum:
Erzeugen eines ersten Steuerungssignals an einem Netzwerkknoten (115; 125; 135; 145) eines ausgewählten Kommunikationsnetzwerks (110; 120; 130; 140) zum Zuweisen einer Verantwortung für das Verwalten des Umleitens von Datenverkehr des Roaming-Endgeräts (140).

7. Steuerungssystem (150) nach Anspruch 5 oder Anspruch 6, wobei das Steuerungssystem (150) ferner konfiguriert ist zum:
Erzeugen eines zweiten Steuerungssignals an einem Netzwerkknoten (115; 125; 135; 145) eines Kommunikationsnetzwerks (110; 120; 130; 140), das das Roaming-Endgerät (100) bedient.

8. Steuerungssystem nach Anspruch 7, wobei das Steuerungssystem (150) zum Erzeugen des ersten Steuerungssignals und des zweiten Steuerungssignals konfiguriert ist, sodass diese das Kommunikationsnetzwerk (110; 120; 130; 140), das das Roaming-Endgerät (100) bedient, und das ausgewählte Kommunikationsnetzwerk (110; 120; 130; 140) veranlassen, den Datenverkehr zwischen dem Roaming-Endgerät (100) und dem Datennetzwerk (160) über das ausgewählte Kommunikationsnetzwerk (110; 120; 130; 140) anzuordnen.

9. Computerprogramm umfassend einen computerlesbaren Programmcode, der zum Durchführen des Verfahrens nach einem der Ansprüche 1 bis 4 konfiguriert ist, wenn der computerlesbare Programmcode auf einem oder mehreren Rechengeräten ausgeführt wird.

10. Kommunikationssystem, umfassend:
eine Vielzahl von Kommunikationsnetzwerken (110; 120; 130; 140)
ein Datennetzwerk (160),
ein Endgerät (100), das von einem der Vielzahl von Kommunikationsnetzwerken (110; 120; 130; 140) bedient wird, und
ein Steuerungssystem (150) nach einem der Ansprüche 5 bis 8.

## Revendications

1. Procédé de commande d'un routage de trafic de données d'un dispositif terminal itinérant (100) avec un réseau de données (160), le dispositif terminal itinérant (100) est desservi par un réseau de communication visité (140), le procédé, réalisé par un système de commande (150), comprend :
la réception (210), en provenance d'une application exécutée dans le dispositif terminal itinérant (100), d'une demande d'établissement d'une connexion, la connexion doit être établie sur une session d'unité de données par paquets spécifique à l'application, PDU,
dans lequel le procédé comprend également :
la détermination (220), sur la base de la session PDU, d'au moins une politique de routage du trafic de données entre le dispositif terminal itinérant (100) et le réseau de données (160), la détermination (220) de l'au moins une politique sur la base de la session PDU est réalisée sur la base d'une détection d'au moins un paramètre descriptif d'un type de trafic de données provoqué par l'activation de l'application exécutée dans le dispositif terminal itinérant (100), dans lequel l'au moins un paramètre est basé sur la session PDU, et
la sélection (230), sur la base de l'au moins une politique, d'un réseau de communication (110 ; 120 ; 130 ; 140) pour gérer le routage du trafic de données du dispositif terminal itinérant (100).

2. Procédé selon la revendication 1, le procédé comprend également :
la génération d'un premier signal de commande vers un nœud de réseau (115 ; 125 ; 135 ; 145) d'un réseau de communication sélectionné (110 ; 120 ; 130 ; 140) pour attribuer une responsabilité de gestion du routage du trafic de données du dispositif terminal itinérant (140).

3. Procédé selon l'une quelconque des revendications précédentes, le procédé comprend également :
la génération d'un second signal de commande vers un nœud de réseau (115 ; 125 ; 135 ; 145) d'un réseau de communication (110 ; 120 ; 130 ; 140) desservant le dispositif terminal itinérant (100).

4. Procédé selon la revendication 3, dans lequel le premier signal de commande et le second signal de commande amènent le réseau de communication (110 ; 120 ; 130 ; 140) à desservir le dispositif terminal itinérant (100) et le réseau de communication sélectionné (110 ; 120 ; 130 ; 140) à organiser le trafic de données entre le dispositif terminal itinérant (100) et le réseau de données (160) par le biais du réseau de communication sélectionné (110 ; 120 ; 130 ; 140).

5. Système de commande (150) pour commander un routage de trafic de données d'un dispositif terminal itinérant (100) avec un réseau de données (160), le dispositif terminal itinérant (100) est desservi par un réseau de communication visité (140), le système de commande (150) est configuré pour :
recevoir (210), en provenance d'une application exécutée dans le dispositif terminal itinérant (100), une demande d'établissement d'une connexion, la connexion doit être établie sur une session d'une unité de données par paquets spécifique à l'application, PDU,
dans lequel le système de commande (150) est également configuré pour :
déterminer (220), sur la base de la session PDU, au moins une politique de routage du trafic de données entre le dispositif terminal itinérant (100) et le réseau de données (160), la détermination (220) de l'au moins une politique sur la base de la session PDU est réalisée sur la base d'une détection d'au moins un paramètre descriptif d'un type de trafic de données provoqué par une activation de l'application exécutée dans le dispositif terminal itinérant (100), et
sélectionner (230), sur la base de l'au moins une politique, un réseau de communication (110 ; 120 ; 130 ; 140) pour gérer le routage du trafic de données du dispositif terminal itinérant (100).

6. Système de commande (150) selon la revendication 5, le système de commande (150) étant également configuré pour :
générer un premier signal de commande vers un nœud de réseau (115 ; 125 ; 135 ; 145) d'un réseau de communication sélectionné (110 ; 120 ; 130 ; 140) pour attribuer une responsabilité de gestion du routage du trafic de données du dispositif terminal itinérant (140).

7. Système de commande (150) selon la revendication 5 ou la revendication 6, le système de commande (150) étant également configuré pour :
générer un second signal de commande vers un nœud de réseau (115 ; 125 ; 135 ; 145) d'un réseau de communication (110 ; 120 ; 130 ; 140) desservant le dispositif terminal itinérant (100).

8. Système de commande selon la revendication 7, dans lequel le système de commande (150) est configuré pour générer le premier signal de commande et le second signal de commande de sorte qu'ils amènent le réseau de communication (110 ; 120 ; 130 ; 140) à desservir le dispositif terminal itinérant (100) et le réseau de communication sélectionné (110 ; 120 ; 130 ; 140) à organiser le trafic de données entre le dispositif terminal itinérant (100) et le réseau de données (160) par le biais du réseau de communication sélectionné (110 ; 120 ; 130 ; 140).

9. Programme informatique comprenant un code de programme lisible par ordinateur configuré pour amener la réalisation du procédé selon l'une quelconque des revendications 1 à 4 lorsque le code de programme lisible par ordinateur est exécuté sur un ou plusieurs appareils informatiques.

10. Système de communication, comprenant :
une pluralité de réseaux de communication (110 ; 120 ; 130 ; 140),
un réseau de données (160),
un dispositif terminal (100) desservi par l'un de la pluralité de réseaux de communication (110 ; 120 ; 130 ; 140) et
un système de commande (150) selon l'une quelconque des revendications 5 à 8.
